# EUROPEAN PATENT APPLICATION

(11) **EP 4 570 094 A1**
(43) Date of publication of application: **18.06.2025**
(21) Application number: 24210483.4
(22) Date of filing: 04.11.2024
(51) Int. Cl.: A24F 40/485, A24F 40/10

(54) **ATOMIZER AND AEROSOL-FORMING DEVICE**

(30) Priority: 15.11.2023 CN 202323097339 U
(71) Applicant: Smoore International Holdings Limited, George Town, Grand Cayman, KY1-1111 (KY)
(72) Inventor: PENG, Chaoqiang, Shenzhen, 518102 (CN); LI, Guangtao, Shenzhen, 518102 (CN); JIN, Hu, Shenzhen, 518102 (CN); LI, Guanghui, Shenzhen, 518102 (CN)
(74) Representative: Westphal, Mussgnug & Partner, Patentanwälte mbB

(57) **Abstract**

This application discloses an atomizer and an aerosol-forming device including the atomizer. The atomizer includes a housing assembly, a heating element and a sealing bar. A liquid storage cavity and an atomization cavity are formed in the housing assembly. The heating element is arranged in the housing assembly and is in communication with the atomization cavity and the liquid storage cavity separately. The atomization cavity has an air inlet and an air outlet that are provided coaxially. When the sealing bar is at a first position, the sealing bar passes through the atomization cavity in an axial direction of the atomizer, and the sealing bar is in elastic sealing fit with the housing assembly at the air outlet and the air inlet separately. When the sealing bar is at a second position, the sealing bar is completely detached from the atomizer. The sealing bar is an integrated connection structure.

## Description

### TECHNICAL FIELD

This application belongs to the field of aerosol-forming technologies, and more specifically, to an atomizer and an aerosol-forming device.

### BACKGROUND

An aerosol-forming device is configured to heat and atomize an atomization medium after being powered on, to form aerosol, and guide the aerosol out through an airflow channel for inhalation by a user. A liquid storage cavity is formed in the aerosol-forming device, and the liquid storage cavity stores the atomization medium. In a transportation or carrying process, the aerosol-forming device may generate a relatively large air pressure change, resulting in leakage of the atomization medium in the liquid storage cavity under the action of the air pressure.

### SUMMARY

An objective of embodiments of this application is to provide an atomizer and an aerosol-forming device, to resolve a technical problem that an existing aerosol-forming device may easily cause leakage of an atomization medium in a transportation or carrying process.

In order to achieve the above objective, this application adopts the following technical solution: An atomizer is provided, including a housing assembly and a heating element. A liquid storage cavity and an atomization cavity are formed in the housing assembly, and the heating element is arranged in the housing assembly and is in communication with the atomization cavity and the liquid storage cavity separately. The atomization cavity has an air inlet and an air outlet that are provided coaxially. The atomizer further includes a sealing bar. When the sealing bar is at a first position, the sealing bar passes through the atomization cavity in an axial direction of the atomizer, and the sealing bar is in elastic sealing fit with the housing assembly at the air outlet and the air inlet separately. When the sealing bar is at a second position, the sealing bar is completely detached from the atomizer. The sealing bar is an integrated connection structure.

In a possible design, the heating element has an atomization surface facing the atomization cavity, the atomization surface is arranged toward the sealing bar, and the atomization surface is spaced away from the sealing bar.

In a possible design, the sealing bar includes a rod body and a head that are integrally connected. When the sealing bar is at the first position, the rod body is in elastic sealing fit with the housing assembly at the air outlet and the air inlet separately, and the head extends out of the housing assembly.

In a possible design, an air outlet channel in communication with the air outlet is further formed in the housing assembly. The rod body includes a first rod section and a second rod section, the first rod section is connected to the head, the first rod section passes through the air outlet channel, the second rod section passes through the atomization cavity, and an outer diameter of the second rod section is less than an outer diameter of the first rod section.

In a possible design, a first sealing member is mounted at the air outlet, a second sealing member is mounted at the air inlet, both the first sealing member and the second sealing member are elastic, and the sealing bar is in interference insertion fit with the first sealing member and the second sealing member separately.

In a possible design, the housing assembly includes an atomization base and a main housing, the atomization base is mounted in the main housing, the atomization base and the main housing are enclosed to form the liquid storage cavity, and the first sealing member abuts against between the main housing and the atomization base through interference to seal the liquid storage cavity. The atomization cavity is formed in the atomization base.

In a possible design, the main housing includes an inner cylinder and an outer cylinder, and a top end of the inner cylinder is integrally connected to a top end of the outer cylinder. The atomization base is assembled in a bottom inner cavity of the outer cylinder, a bottom end of the inner cylinder extends to the air outlet of the atomization base, and the air outlet channel in communication with the air outlet is formed in the inner cylinder. The outer cylinder, the inner cylinder, and the atomization base are enclosed to form the liquid storage cavity. The first sealing member abuts against between the outer cylinder and the atomization base through interference, and the first sealing member abuts against between the inner cylinder and the atomization base through interference.

In a possible design, the atomization base includes a first base body and a second base body. The first base body includes a top side portion and a first side portion formed below the top side portion, the second base body includes a bottom side portion and a second side portion formed on the bottom side portion, the first side portion and the second side portion are connected and engaged with each other, the top side portion is located at a position other than the first side portion and covers a top side of the second side portion, and the bottom side portion is located at a position other than the second side portion and covers a bottom side of the first side portion. The atomization cavity is formed by enclosing the first side portion and the second side portion, the air inlet is formed in the bottom side portion, and the air outlet is formed in the top side portion.

In a possible design, a vent channel is further formed in the housing assembly, one end of the vent channel is in communication with the atomization cavity, and the other end of the vent channel is in communication with the liquid storage cavity.

The atomizer provided in this application has the following beneficial effects: According to the atomizer provided in the embodiments of this application, the sealing bar is arranged in the atomizer, and when the sealing bar is at the first position, the sealing bar may seal the air inlet and the air outlet of the atomization cavity, that is, when the atomizer is in an environment in which an air pressure changes greatly, the atomization cavity may be separated from an external environment through the sealing bar in advance, so that an impact of a change of an air pressure of the external environment on a difference between air pressures inside and outside the liquid storage cavity is reduced, thereby effectively alleviating leakage of an atomization medium in the liquid storage cavity. When the atomizer is in normal use, the sealing bar may be completely detached from the atomizer. In addition, the sealing bar is set to be an integrated connection structure, so that a manufacturing process of the sealing bar is more simple and costs are lower.

According to another aspect, this application further provides aerosol-forming device, including a power supply unit and the atomizer. The power supply unit is configured to supply power to the atomizer, and the atomizer is configured to heat and atomize an atomization medium after being powered on, to form aerosol.

The aerosol-forming device provided in this application has the following beneficial effects: According to the aerosol-forming device provided in the embodiments of this application, through arrangement of the atomizer, liquid leakage of the aerosol-forming device can be alleviated, and manufacturing costs of the aerosol-forming device are further low.

### BRIEF DESCRIPTION OF THE DRAWINGS

To describe the technical solutions in the embodiments of this application more clearly, the following briefly introduces the accompanying drawings required for describing the embodiments or the prior art. Apparently, the accompanying drawings in the following description show merely some embodiments of this application, and a person of ordinary skill in the art may still derive other drawings from these accompanying drawings without creative efforts.
FIG. 1 is a three-dimensional schematic structural diagram of an aerosol-forming device according to an embodiment of this application;
FIG. 2 is a schematic three-dimensional exploded view of an aerosol-forming device according to an embodiment of this application;
FIG. 3 is a schematic cross-sectional view of an aerosol-forming device in an axial direction of an atomizer according to an embodiment of this application;
FIG. 4 is a schematic enlarged view of a portion A in FIG. 3;
FIG. 5 is a three-dimensional schematic structural exploded view of an atomizer from which a main housing is removed according to an embodiment of this application;
FIG. 6 is a schematic diagram of a three-dimensional assembly structure of an atomizer in which a main housing is removed according to an embodiment of this application;
FIG. 7 is a schematic diagram of a three-dimensional assembly structure of an atomizer in which a main housing and a first sealing member are removed according to an embodiment of this application;
FIG. 8 is a three-dimensional schematic structural diagram of a first sealing member in an atomizer according to an embodiment of this application;
FIG. 9 is a three-dimensional schematic structural diagram of a second base body in an atomizer according to an embodiment of this application;
FIG. 10 is a schematic diagram of a first base body in an atomizer from a first angle according to an embodiment of this application; and
FIG. 11 is a schematic diagram of a first base body in an atomizer from a second angle according to an embodiment of this application.

Reference numerals in the drawings:
1000: atomizer; 1: main housing; 11: inner cylinder; 12: outer cylinder; 13: extending portion; 14: first mounting cavity; 2: atomization base; 21: first base body; 211: top side portion; 212: first side portion; 213: second engagement block; 214: groove; 215: pressing plate; 22: second base body; 221: bottom side portion; 222: second side portion; 223: second engagement groove; 224: first engagement block; 225: step; 3: heating element; 31: liquid inlet surface; 32: atomization surface; 4: sealing gasket; 5: first sealing member; 51: first sealing cylinder; 511: convex ring; 52: second sealing cylinder; 53: connection portion; 531: bump; 6: second sealing member; 61: third sealing cylinder; 62: mounting plate; 7: electrode column; 8: sealing bar; 81: rod body; 811: first rod section; 812: second rod section; 82: head; 100: liquid storage cavity; 200: atomization cavity; 210: air outlet; 220: air inlet; 230: connection opening; 300: liquid guide cavity; 400: air outlet channel; 500: conical groove; 600: vent channel; 700: liquid collecting cavity; 800: condensation cavity; 900: capillary channel; 2000: power supply unit; 2100: battery tube; 2200: battery; 2300: microphone; 2400: microphone base; 2500: bottom cover; 2510: second mounting cavity; 2520: third mounting cavity; 2530: air inlet hole; 2540: mounting opening; 2600: sealing cover; and 2700: gasket.

### DETAILED DESCRIPTION

To make the technical problems resolved by this application, technical solutions, and advantageous effects clearer and more comprehensible, the following further describes this application in detail with reference to the accompanying drawings and embodiments. It should be understood that the specific embodiments described herein are merely used to explain this application but are not intended to limit this application.

It should be noted that, when an element is described as being "fixed on" or "arranged on" another element, the element may be directly located on the another element, or indirectly located on the another element. When an element is described as being "connected to" another element, the element may be directly connected to the another element, or indirectly connected to the another element.

It should be understood that orientation or position relationships indicated by the terms such as "length," "width," "above," "below," "front," "back," "left," "right," "vertical," "horizontal" "top," "bottom," "inside," and "outside" are based on orientation or position relationships shown in the accompanying drawings, and are used only for ease and brevity of illustration and description of this application, rather than indicating or implying that the mentioned device or component needs to have a particular orientation or needs to be constructed and operated in a particular orientation. Therefore, such terms should not be construed as limiting this application.

In addition, the terms "first" and "second" are only used for the purpose of description, and cannot be understood as indicating or implying relative importance or implicitly indicating the quantity of indicated technical features. Therefore, features defining "first" and "second" may explicitly or implicitly include one or more such features. In the descriptions of this application, "a plurality of' means two or more, unless otherwise definitely and specifically limited.

As described in the background, in a transportation or carrying process, an aerosol-forming device may generate a relatively large air pressure change, which causes air exchange between a liquid storage cavity and an external environment, finally resulting in leakage of an atomization medium in the liquid storage cavity.

To resolve the foregoing problem, the inventor of this application finally provides an atomizer 1000 and an aerosol-forming device through long-term in-depth research. A sealing bar 8 is inserted into the atomizer 1000, and both an air inlet 220 and an air outlet 210 of an atomization cavity 200 are sealed and blocked by using the sealing bar 8, so that a leakage risk of an atomization medium in a liquid storage cavity 100 can be reduced.

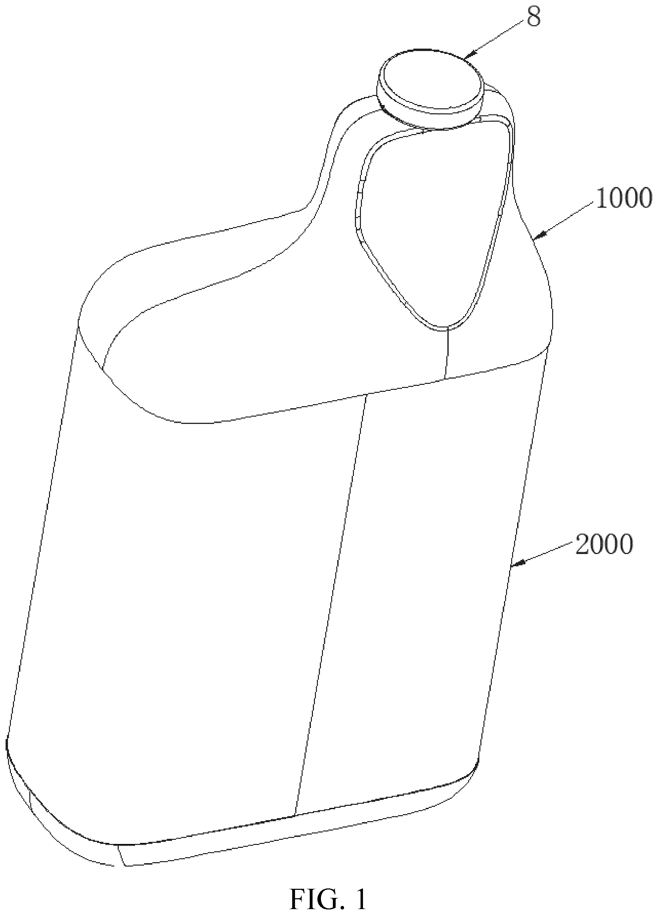

Referring to FIG. 1 to FIG. 3, embodiments of this application provide an aerosol-forming device, including a power supply unit 2000 and an atomizer 1000. The power supply unit 2000 is mechanically and electrically connected to the atomizer 1000. The power supply unit 2000 is configured to supply power to the atomizer 1000. The atomizer 1000 is configured to heat and atomize an atomization medium after being powered on, to form aerosol for inhalation by a user. The power supply unit 2000 described herein is a power supply assembly formed by a physical structure.

Referring to FIG. 1 to FIG. 4, the atomizer 1000 includes a housing assembly (not marked in the figure) and a heating element 3. The liquid storage cavity 100 and the atomization cavity 200 are formed in the housing assembly, and the heating element 3 is arranged in the housing assembly and is in communication with the atomization cavity 200 and the liquid storage cavity 100 separately. The air inlet 220 is provided in a bottom portion of the atomization cavity 200, the air outlet 210 is provided in a top portion of the atomization cavity 200, and the air inlet 220 and the air outlet 210 of the atomization cavity 200 are provided coaxially. The atomizer 1000 further includes the sealing bar 8. When the sealing bar 8 is at a first position, the sealing bar 8 passes through the atomization cavity 200 in an axial direction of the atomizer 1000 and is arranged coaxially with the air inlet 220 and the air outlet 210 of the atomization cavity 200, and the sealing bar 8 is in elastic sealing fit with the housing assembly at the air outlet 210 and the air inlet 220 separately. When the sealing bar 8 is at a second position, the sealing bar 8 is completely detached from the atomizer 1000. The sealing bar 8 is an integrated connection structure.

In the embodiments of this application, the sealing bar 8 is arranged in the atomizer 1000, and when the sealing bar 8 is at the first position, the sealing bar 8 may seal the air inlet 220 and the air outlet 210 of the atomization cavity 200, that is, when the atomizer 1000 is in an environment in which an air pressure changes greatly, the atomization cavity 200 may be separated from an external environment through the sealing bar 8 in advance, so that an impact of a change of an air pressure of the external environment on a difference between air pressures inside and outside the liquid storage cavity 100 is reduced, thereby effectively alleviating leakage of an atomization medium in the liquid storage cavity 100. When the atomizer 1000 is in normal use, the sealing bar 8 may be completely detached from the atomizer 1000. In addition, the sealing bar 8 is in an integrated connection, so that a manufacturing process of the sealing bar 8 is more simple and costs are lower.

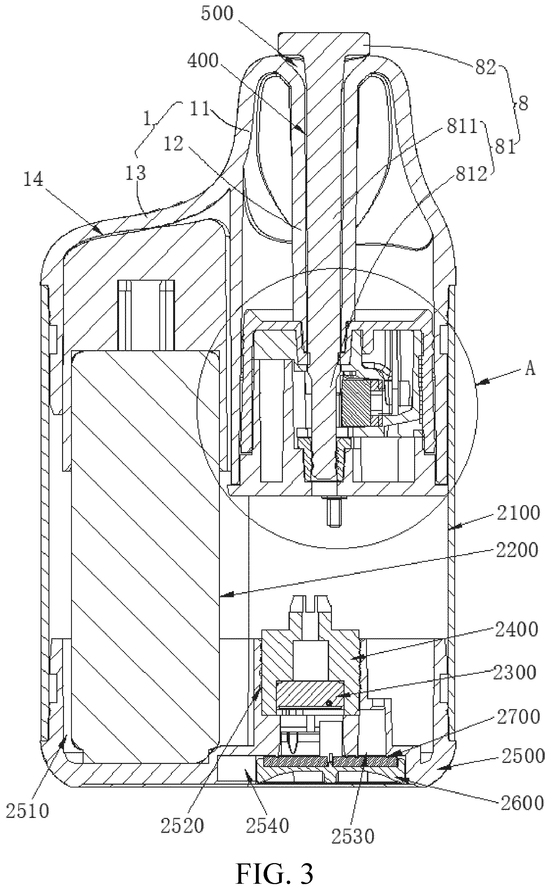

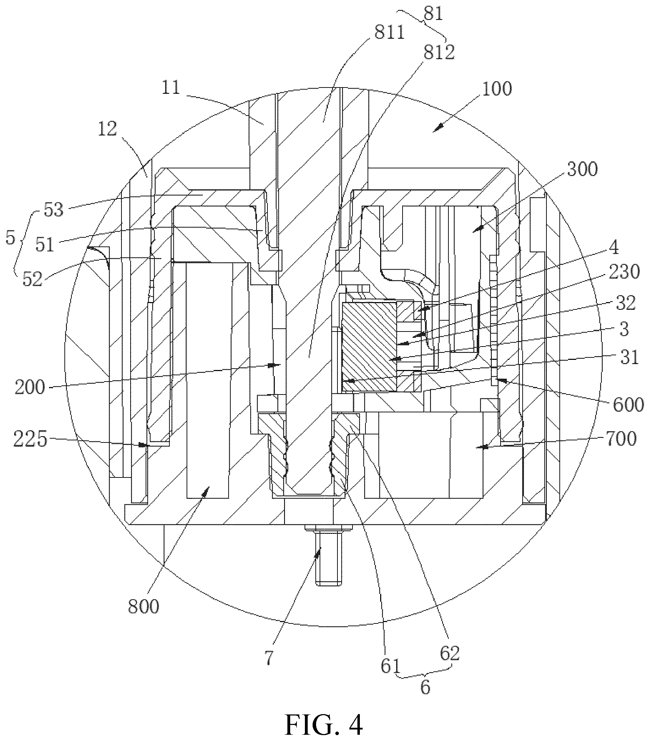

In an embodiment, referring to FIG. 3 and FIG. 4, the sealing bar 8 includes a rod body 81 and a head 82. When the sealing bar 8 is at the first position, the rod body 81 passes through the atomization cavity 200 in the axial direction of the atomizer 1000 and is arranged coaxially with the air inlet 220 and the air outlet 210 of the atomization cavity 200, and the rod body 81 is in elastic sealing fit with the housing assembly at the air outlet 210 and the air inlet 220. The head 82 extends out of the housing assembly, and the rod body 81 and the head 82 are an integrated connection structure. In this embodiment, the sealing bar 8 is divided into the rod body 81 and the head 82. The rod body 81 may be configured to seal the air inlet 220 and the air outlet 210 of the atomization cavity 200, and the head 82 may extend out of the housing assembly for holding by hand, so that the rod body 81 may be inserted into the atomization cavity 200 or removed from the atomization cavity 200 through the head 82.

In an embodiment, referring to FIG. 4, the heating element 3 and the sealing bar 8 are spaced in the atomization cavity 200. In other words, when the sealing bar 8 is inserted into the atomization cavity 200, the sealing bar 8 does not need to pass through the heating element 3, so that assembly of the sealing bar 8 does not cause damage to the heating element 3. In addition, the sealing bar 8 may be inserted into the atomization cavity 200 from the air inlet 220, and then the sealing bar 8 may be in an integrated connection, thereby simplifying a manufacturing process of the sealing bar 8.

In an embodiment, referring to FIG. 4, the heating element 3 has an atomization surface 32 facing the atomization cavity 200, the atomization surface 32 is arranged toward the sealing bar 8, and the atomization surface 32 is spaced away from the sealing bar 8. The atomization surface 32 of the heating element 3 is arranged toward the sealing bar 8, that is, the atomization surface 32 is arranged toward an airflow channel located between the air inlet 220 and the air outlet 210 in the atomization cavity 200. This facilitates rapid removal of aerosol generated by the atomization surface 32 of the heating element 3 through an airflow entering the atomization cavity 200 from the air inlet 220, thereby improving atomization efficiency of the atomizer 1000.

In an embodiment, referring to FIG. 3 and FIG. 4, the sealing bar 8 passes through the atomization cavity 200 in the axial direction of the atomizer 1000. The heating element 3 has an atomization surface 32 facing the atomization cavity 200 and a liquid inlet surface 31 facing the liquid storage cavity 100, the atomization surface 32 is arranged toward the sealing bar 8, and the atomization surface 32 is arranged parallel to an axial direction of the sealing bar 8. In this application, the atomization surface 32 is parallel to the axial direction of the sealing bar 8, that is, the atomization surface 32 of the heating element 3 is parallel to the axial direction of the atomizer 1000, so that a space occupied by the heating element 3 in a radial direction of the atomizer 1000 can be reduced, and when the sealing bar 8 passes through the atomization cavity 200, no damage is caused to the heating element 3. It may be understood that in another embodiment of this application, the atomization surface 32 may alternatively be arranged at an angle with the axial direction of the sealing bar 8. This is not uniquely limited herein.

In an embodiment, referring to FIG. 4, the liquid storage cavity 100 and the atomization cavity 200 are distributed in the axial direction of the atomizer 1000, and the atomization cavity 200 is provided below the liquid storage cavity 100. A liquid guide cavity 300 is further formed in the atomizer 1000. The liquid guide cavity 300 and the atomization cavity 200 are spaced, and the heating element 3 is arranged in the atomization cavity 200 and blocks a connection opening 230 between the liquid guide cavity 300 and the atomization cavity 200, to connect the liquid guide cavity 300 and the atomization cavity 200. The atomization medium in the liquid storage cavity 100 flows to the liquid guide cavity 300 under the action of gravity and an air pressure in the liquid storage cavity 100 and is absorbed by the liquid inlet surface 31 of the heating element 3 through the liquid guide cavity 300, and the atomization medium is heated by the heating element 3 to form aerosol, and the aerosol flows from the atomization surface 32 to the atomization cavity 200. In this embodiment, the liquid guide cavity 300 is arranged on a side surface of the atomization cavity 200, so that the atomization medium in the liquid storage cavity 100 can be guided to the side surface of the atomization cavity 200, and is absorbed by the heating element 3 and is heated and atomized.

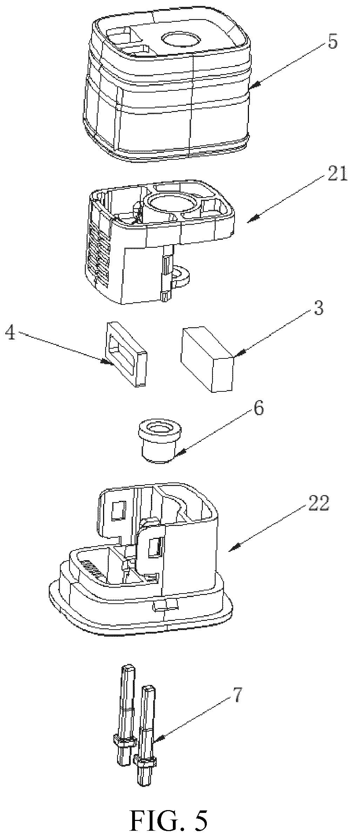

In an embodiment, referring to FIG. 4 and FIG. 5, the atomizer 1000 further includes a sealing gasket 4. The sealing gasket 4 elastically abuts against the liquid inlet surface 31 of the heating element 3 and an end surface of the connection opening 230 facing the atomization cavity 200, to sealedly mount the heating element 3 at the connection opening 230, so that the atomization medium in the liquid guide cavity 300 can be absorbed by the heating element 3 only through the liquid inlet surface 31 of the heating element 3, and the atomization medium cannot be leaked from a gap between the heating element 3 and the housing assembly to the atomization cavity 200, thereby reducing leakage of the atomization medium in the liquid storage cavity 100.

In an embodiment, referring to FIG. 3 and FIG. 4, an air outlet channel 400 in communication with the air outlet 210 is further formed in the atomizer 1000. The rod body 81 includes a first rod section 811 and a second rod section 812, the first rod section 811 is connected to the head 82, the first rod section 811 passes through the air outlet channel 400, the second rod section 812 passes through the atomization cavity 200, and an outer diameter of the second rod section 812 is less than an outer diameter of the first rod section 811. During assembly, the head 82 is hold by the hand, the second rod section 812 passes through the atomization cavity 200 through the air outlet channel 400 until the first rod section 811 passes through the air outlet channel 400, and the head 82 is blocked on an outer end surface of the housing assembly. The outer diameter of the second rod section 812 is set to be less than the outer diameter of the first rod section 811, so that the second rod section 812 can smoothly pass through the atomization cavity 200 through the air outlet channel 400, to form sealing assembly on the air inlet 220 and the air outlet 210 separately in the housing assembly. In addition, the outer diameter of the second rod section 812 is set to be small, so that a space occupied by the second rod section 812 in the atomization cavity 200 is small, and the second rod section 812 can be spaced away from the heating element 3, to avoid damage to the heating element 3 caused by assembly of the second rod section 812.

In an embodiment, referring to FIG. 3, a conical groove 500 is formed on an end of the air outlet channel 400 facing away from the atomization cavity 200. The conical groove 500 is conical and is configured to guide the second rod section 812 to pass through the air outlet channel 400, to improve assembly smoothness of the sealing bar 8.

In an embodiment, referring to FIG. 4, a first sealing member 5 is mounted at the air outlet 210, a second sealing member 6 is mounted at the air inlet 220, and both the first sealing member 5 and the second sealing member 6 are elastic. The sealing bar 8 is in interference insertion fit with the first sealing member 5 and the second sealing member 6 separately. In this embodiment, the elastic second sealing member 6 and the elastic first sealing member 5 are respectively arranged at the air inlet 220 and the air outlet 210, and then the sealing bar 8 is in interference insertion fit with the second sealing member 6 and the first sealing member 5 separately, to implement sealing assembly of the sealing bar 8 at the air inlet 220 and the air outlet 210. It may be understood that in another embodiment of this application, the sealing members may not be arranged at the air inlet 220 and the air outlet 210, but the sealing bar 8 is made of an elastic sealing material and is directly in elastic interference assembly with the air inlet 220 and the air outlet 210 through the rod body 81. This is not uniquely limited herein.

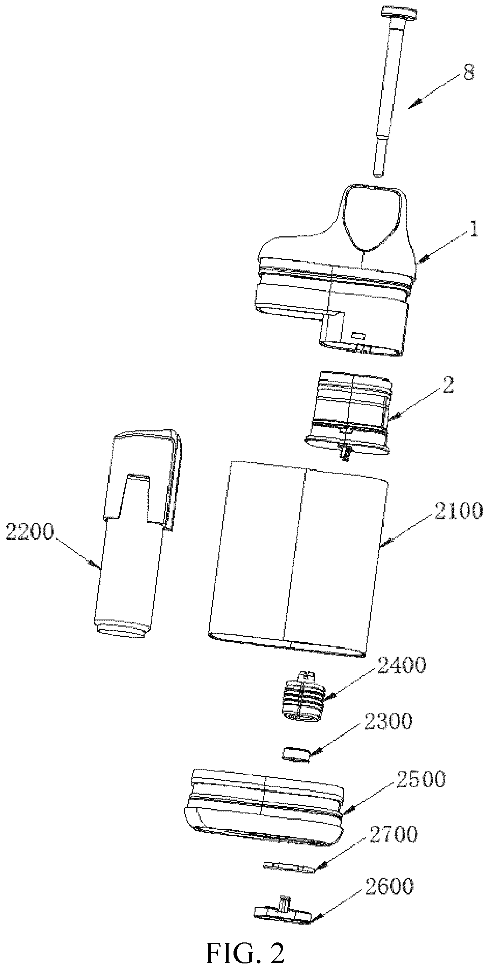

In an embodiment, referring to FIG. 2 and FIG. 3, the housing assembly includes an atomization base 2 and a main housing 1. The atomization base 2 is mounted in the main housing 1, the atomization base 2 and the main housing 1 are enclosed to form the liquid storage cavity 100, and the first sealing member 5 abuts against between the main housing 1 and the atomization base 2 through interference to seal the liquid storage cavity 100. The atomization cavity 200 is formed in the atomization base 2. In this embodiment, the liquid storage cavity 100 is sealed through the first sealing member 5, and the sealing bar 8 can seal the atomization cavity 200, so that an impact of a change of an air pressure of an external environment on a difference between air pressures inside and outside the liquid storage cavity 100 is reduced, thereby further reducing a leakage risk of the atomization medium in the liquid storage cavity 100.

In an embodiment, referring to FIG. 3 and FIG. 4, the main housing 1 includes an inner cylinder 11 and an outer cylinder 12. A top end of the inner cylinder 11 is integrally connected to a top end of the outer cylinder 12. The atomization base 2 is assembled in a bottom inner cavity of the outer cylinder 12, a bottom end of the inner cylinder 11 extends to the air outlet 210 of the atomization base 2, and the air outlet channel 400 in communication with the air outlet 210 is formed in the inner cylinder 11. The outer cylinder 12, the inner cylinder 11, and the atomization base 2 are enclosed to form the liquid storage cavity 100. The first sealing member 5 abuts against between the outer cylinder 12 and the atomization base 2 through interference, and the first sealing member 5 abuts against between the inner cylinder 11 and the atomization base 2 through interference. In this embodiment, sealing between the outer cylinder 12 and the atomization base 2 and sealing between the inner cylinder 11 and the atomization base 2 are implemented through the first sealing member 5, and the outer cylinder 12 is integrally connected to the inner cylinder 11, so that the liquid storage cavity 100 has only one opening, and the opening can be sealed through the first sealing member 5. Through the design, assembly of the main housing 1 and the atomization base 2 is simple, a sealing structure between the main housing 1 and the atomization base 2 is also simple, and assembly is simple.

In an embodiment, referring to FIG. 4, the first sealing member 5 includes a first sealing cylinder 51, a second sealing cylinder 52, and a connection portion 53. The first sealing cylinder 51 abuts against between an inner wall of the air outlet 210 and the inner cylinder 11 through interference, and the first sealing cylinder 51 abuts against between the inner wall of the air outlet 210 and the sealing bar 8 through interference. The second sealing cylinder 52 abuts against between the outer cylinder 12 and the atomization base 2 through interference, the connection portion 53 is connected between the first sealing cylinder 51 and the second sealing cylinder 52, and the connection portion 53 is in concave-convex interference fit with a top portion of the atomization base 2. During assembly, the first sealing member 5 is sleeved on the atomization base 2 from top to bottom, so that the first sealing cylinder 51 is assembled in the air outlet 210 through interference, the second sealing cylinder 52 is sleeved on an outer peripheral wall of the atomization base 2 through interference, the connection portion 53 is attached to the top portion of the atomization base 2, and the connection portion 53 is in concave-convex interference fit with the top portion of the atomization base 2. Therefore, the first sealing member 5 is firmly mounted on the atomization base 2. Then, the first sealing member 5 and the atomization base 2 are mounted in the bottom inner cavity of the outer cylinder 12 as a whole until the top end of the inner cylinder 11 is inserted into the first sealing cylinder 51, so that assembly is simple.

In an embodiment, the first sealing cylinder 51, the second sealing cylinder 52, and the connection portion 53 are an integrated connection structure, and the first sealing cylinder 51, the second sealing cylinder 52, and the connection portion 53 are integrally formed by injection molding by using a soft-plastic material. In an embodiment, a plurality of convex rings 511 protrude on an outer peripheral wall of the first sealing cylinder 51, the convex rings 511 are arranged in an axial direction of the first sealing cylinder 51 at intervals, and the convex rings 511 extend in a circumferential direction of the first sealing cylinder 51.

The convex ring 511 is configured to elastically abut against an inner peripheral wall of the outer cylinder 12. The arrangement of the convex ring 511 not only enables the outer cylinder 12 to be sealedly connected to the atomization base 2, but also enables the first sealing cylinder 51 to be easily mounted into the outer cylinder 12.

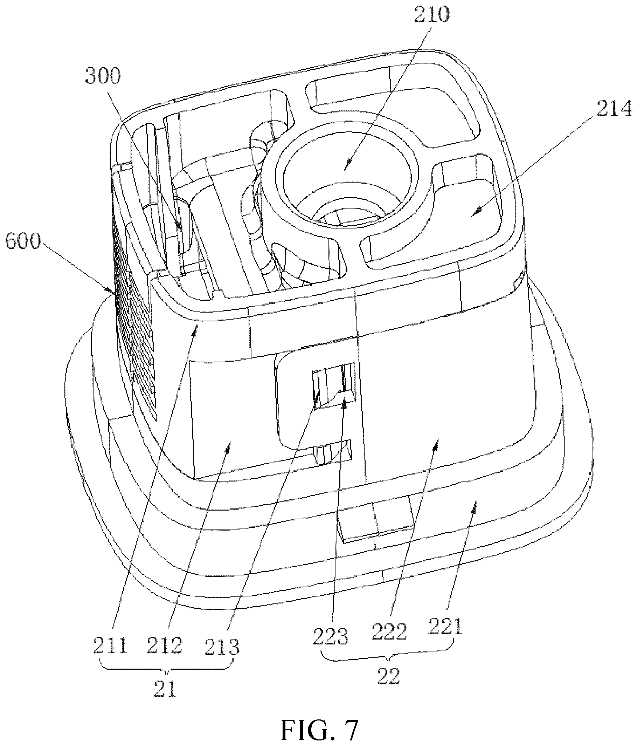

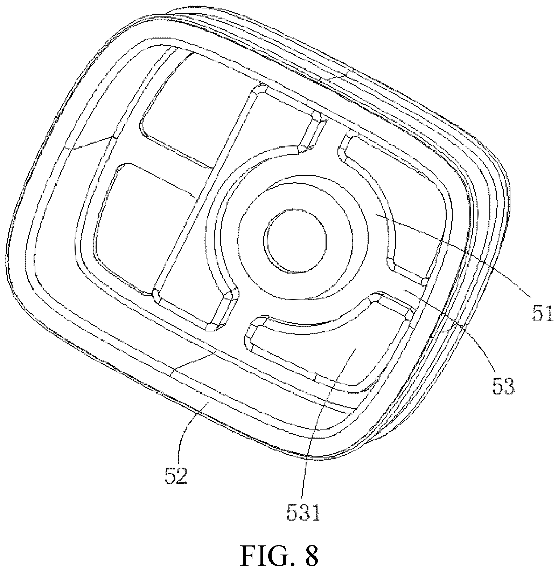

In an embodiment, referring to FIG. 7 and FIG. 8, a plurality of bumps 531 protrude on an inner side of the connection portion 53, a plurality of grooves 214 are provided on the top portion of the atomization base 2, and the bumps 531 are embedded into the grooves 214 through interference in a one-to-one correspondence manner, so that the connection portion 53 closely fits with the top portion of the atomization base 2.

In an embodiment, the atomization base 2 is connected to the outer cylinder 12 through an engagement structure. During mounting, the atomization base 2 is inserted into the outer cylinder 12 in an axial direction from a bottom end of the outer cylinder 12, and the atomization base 2 is engaged with the outer cylinder 12 through the engagement structure. In addition, the atomization base 2 closely fits with the outer cylinder 12 through the first sealing member 5, and the atomization base 2 closely fits with the inner cylinder 11 through the first sealing member 5, so that the atomization base 2 is firmly mounted on the outer cylinder 12 and the inner cylinder 11.

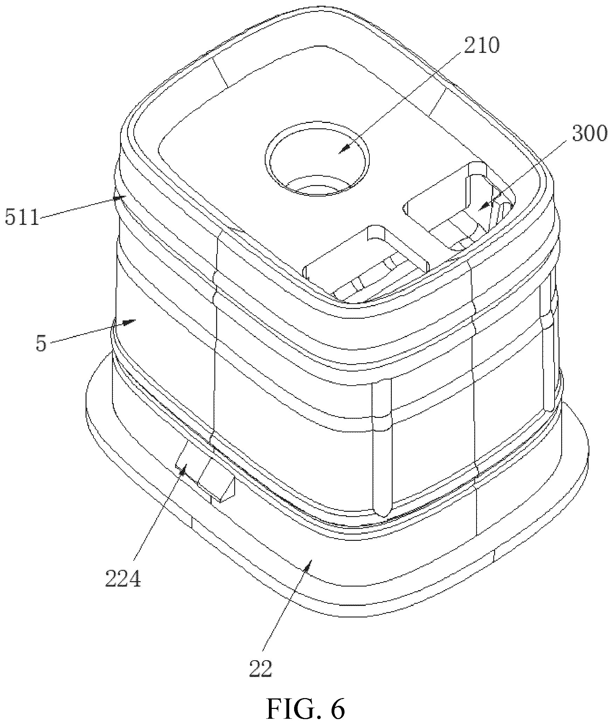

In an embodiment, referring to FIG. 6, a first engagement block 224 is formed on an outer side wall of the atomization base 2, a first engagement groove (not shown in the figure) is formed on a side wall of the outer cylinder 12, and the first engagement block 224 is engaged with the first engagement groove. During assembly, the atomization base 2 is inserted into the outer cylinder 12 in the axial direction from the bottom end of the outer cylinder 12 until the first engagement block 224 moves to a position of the first engagement groove and is engaged with the first engagement groove, so that the atomization base 2 is engaged with the outer cylinder 12. It may be understood that in another embodiment of this application, the first engagement block 224 may alternatively be formed on the outer cylinder 12, and the first engagement groove is formed on the atomization base 2. This is not uniquely limited herein.

In an embodiment, referring to FIG. 5, FIG. 7, and FIG. 9 to FIG. 11, the atomization base 2 includes a first base body 21 and a second base body 22. The first base body 21 includes a top side portion 211 and a first side portion 212 formed below the top side portion 211, the second base body 22 includes a bottom side portion 221 and a second side portion 222 formed on the bottom side portion 221, the first side portion 212 and the second side portion 222 are connected and engaged with each other, the top side portion 211 is located at a position other than the first side portion 212 and covers a top side of the second side portion 222, and the bottom side portion 221 is located at a position other than the second side portion 222 and covers a bottom side of the first side portion 212. The atomization cavity 200 is formed by enclosing the first side portion 212 and the second side portion 222, the air inlet 220 is formed in the bottom side portion 221, and the air outlet 210 is formed in the top side portion 211.

In this embodiment, the atomization base 2 is divided into the first base body 21 and the second base body 22, the first base body 21 is divided into the top side portion 211 and the first side portion 212, and the second base body 22 is divided into the bottom side portion 221 and the second side portion 222, so that both positions that are on the first base body 21 and the second base body 22 and at which slots need to be processed are exposed to a surface, to facilitate processing and forming of the first base body 21 and the second base body 22, so as to reduce processing costs of the atomization base 2.

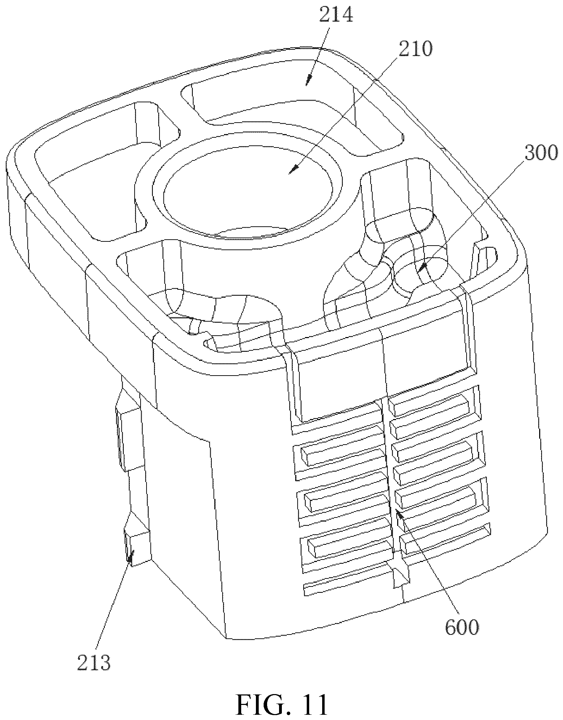

In an embodiment, referring to FIG. 7 and FIG. 11, the liquid guide cavity 300 in communication with the atomization cavity 200 is formed in the first base body 21, the liquid guide cavity 300 runs through the top side portion 211 and the first side portion 212, the liquid guide cavity 300 is provided toward an opening of the liquid storage cavity 100, and the liquid guide cavity 300 is configured to guide the atomization medium in the liquid storage cavity 100 to the heating element 3.

In an embodiment, referring to FIG. 7 and FIG. 11, a vent channel 600 is further formed in the housing assembly. One end of the vent channel 600 is in communication with the atomization cavity 200, and the other end of the vent channel 600 is in communication with the liquid storage cavity 100. In this embodiment, the vent channel 600 is provided, so that a problem that liquid in the liquid storage cavity 100 does not flow smoothly in an inhalation process can be resolved. In addition, one end of the vent channel 600 is in communication with the atomization cavity 200, that is, when air is exchanged through the vent channel 600, an external airflow needs to first enter the atomization cavity 200 and then passes through the atomization cavity 200 and the vent channel 600 to implement air exchange in the liquid storage cavity 100, and the air inlet 220 and the air outlet 210 of the atomization cavity 200 are sealed through the sealing bar 8 in this application, so that in a transportation or carrying process, a change of an air pressure of an external environment does not affect a difference between air pressures inside and outside the liquid storage cavity 100, and liquid leakage of the liquid storage cavity 100 is further alleviated.

In an embodiment, referring to FIG. 7 and FIG. 11, the vent channel 600 is formed on an outer side wall of the first base body 21, the vent channel 600 is a bent and extended channel, and the vent channel 600 is a microchannel with a diameter in a range of 10 um to 1000 um.

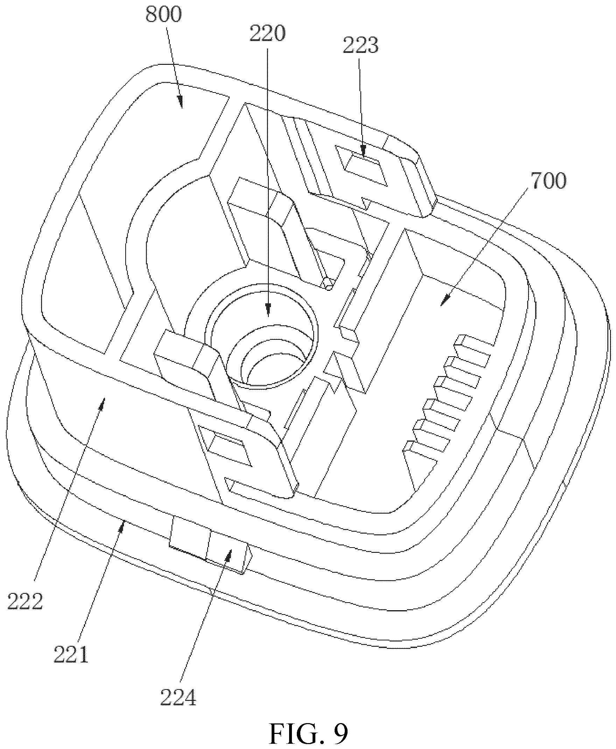

In an embodiment, referring to FIG. 4 and FIG. 9, a liquid collecting cavity 700 is further formed in the housing assembly. The liquid collecting cavity 700 is in communication with one end of the vent channel 600 facing away from the liquid storage cavity 100, the liquid collecting cavity 700 has a preset volume, and the liquid collecting cavity 700 is in communication with the atomization cavity 200. When air needs to be exchanged through the vent channel 600, an external airflow sequentially flows through the atomization cavity 200, the liquid collecting cavity 700, the vent channel 600, and the liquid storage cavity 100, to implement air exchange. When a relatively large negative pressure is generated inside the liquid storage cavity 100, the atomization medium in the liquid storage cavity 100 leaks into the vent channel 600. When there is a large amount of atomization medium in the vent channel 600, the atomization medium may leak into the liquid collecting cavity 700 through the vent channel 600 for storage, instead of directly leaking to the atomization cavity 200 to affect inhalation taste of the atomization cavity 200.

In an embodiment, referring to FIG. 4, the liquid collecting cavity 700 and the atomization cavity 200 are spaced, and a top portion of the liquid collecting cavity 700 is in communication with the atomization cavity 200. Through such arrangement, the atomization medium leaks into the atomization cavity 200 only when a liquid surface of the atomization medium in the liquid collecting cavity 700 reaches the top portion, so that a probability that the atomization medium in the liquid collecting cavity 700 leaks into the atomization cavity 200 is reduced.

In an embodiment, referring to FIG. 7, the liquid collecting cavity 700 is mainly formed by a bottom portion of the second base body 22. Through such arrangement, a peripheral structure of the liquid collecting cavity 700 is an integrated connection structure, and a corresponding sealing member does not need to be arranged, thereby simplifying the structure.

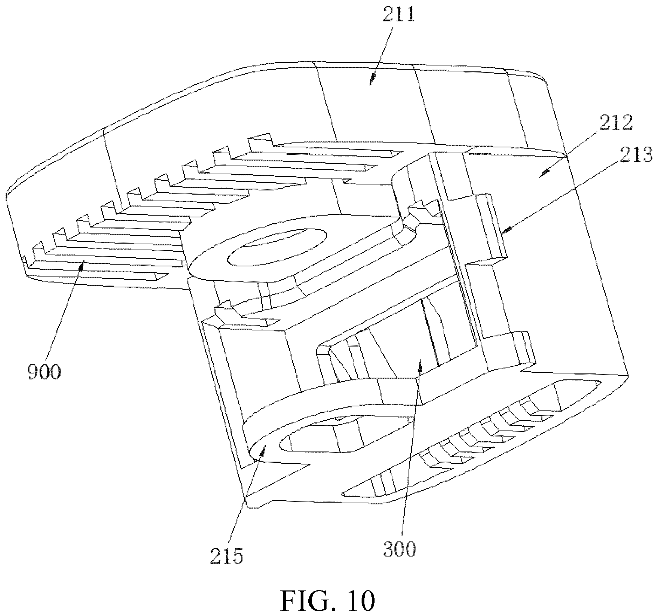

In an embodiment, referring to FIG. 4 and FIG. 9, a condensation cavity 800 is further formed in the housing assembly. The condensation cavity 800 is in communication with the atomization cavity 200 and is configured to collect condensate, so that when inhalation stops, an airflow carrying aerosol refluxes, and the condensation cavity 800 can reabsorb the airflow that is not inhaled in the atomization cavity 200. In an embodiment, referring to FIG. 10, a plurality of parallel capillary channels 900 are formed in the housing assembly. One end of the capillary channel 900 is in communication with the atomization cavity 200, and the other end of the capillary channel 900 is in communication with the condensation cavity 800. When an airflow in the atomization cavity 200 is not absorbed, condensate of the airflow is absorbed by the capillary channel 900 and is collected through the condensation cavity 800, to prevent the condensate from blocking the atomization cavity 200 or the air outlet channel 400.

In an embodiment, referring to FIG. 9 and FIG. 10, the condensation cavity 800 is formed on the second side portion 222, the capillary channel 900 is formed on the top side portion 211, and when the top side portion 211 covers the second side portion 222, the capillary channel 900 is in communication with the condensation cavity 800. In this embodiment, the condensation cavity 800 and the capillary channel 900 are respectively formed on the top side portion 211 and the second side portion 222, so that both the condensation cavity 800 and the capillary channel 900 are located on surfaces of the top side portion 211 and the second side portion 222, to facilitate processing and forming of the condensation cavity 800 and the capillary channel 900.

In an embodiment, referring to FIG. 7, FIG. 9, and FIG. 10, a second engagement block 213 is formed on the first side portion 212, a second engagement groove 223 is formed on the second side portion 222, and the second engagement block 213 is engaged with the second engagement groove 223, so that the first base body 21 is engaged with the second base body 22.

In addition, in this embodiment, referring to FIG. 4, the second sealing cylinder 52 is sleeved on the top side portion 211 and the first side portion 212 of the first base body 21, and the first sealing cylinder 51 is sleeved on the second side portion 222 and at least a part of the bottom side portion 221 of the second base body 22. Through such arrangement, the first base body 21 may be sealedly connected to the second base body 22 through the second sealing cylinder 52, thereby ensuring that the atomization cavity 200 is sealed.

In an embodiment, referring to FIG. 9, a step 225 is formed on an outer side wall of the bottom side portion 221 of the second base body 22, and a bottom end of the second sealing cylinder 52 abuts against the step 225. The first engagement block 224 is formed at a position of the second base body 22 below the step 225, so that the second sealing cylinder 52 and the first engagement block 224 are separated from each other.

In an embodiment, referring to FIG. 4, the second sealing member 6 includes a third sealing cylinder 61 and a mounting plate 62. The third sealing cylinder 61 is assembled in the air inlet 220 through interference, the mounting plate 62 is connected to the third sealing cylinder 61, and the mounting plate 62 is limited on an end surface of the air inlet 220. During mounting, the third sealing cylinder 61 is assembled in the air inlet 220 through interference, the mounting plate 62 abuts against the end surface of the air inlet 220, and finally the mounting plate 62 is limited through a limiting structure, so that the second sealing member 6 is firmly mounted at the air inlet 220.

In an embodiment, referring to FIG. 10, a pressing plate 215 is formed on the first side portion 212 of the first base body 21. When the first side portion 212 is engaged with the second side portion 222, the first side portion 212 abuts against the bottom side portion 221 of the second base body 22, and the pressing plate 215 is pressed on the mounting plate 62 of the second sealing member 6, so that the second sealing member 6 is firmly mounted on the second base body 22.

In an embodiment, referring to FIG. 4 and FIG. 5, the atomizer 1000 further includes two electrode columns 7. The two electrode columns 7 respectively pass through the second base body 22, ends of the two electrode columns 7 are respectively electrically connected to the heating element 3, and the other ends of the two electrode columns 7 are respectively electrically connected to the power supply unit 2000, so that the power supply unit 2000 supplies power to the heating element 3.

In an embodiment, referring to FIG. 2 and FIG. 3, the power supply unit 2000 includes a battery tube 2100, a battery 2200, a circuit board, a microphone 2300, and a bottom cover 2500. One end of the battery tube 2100 is sleeved with the main housing 1, and the bottom cover 2500 covers the other end of the battery tube 2100. An inner cavity of the battery tube 2100 is in communication with the air inlet 220 of the atomization base 2, the microphone 2300 is mounted on the bottom cover 2500, an air inlet hole is formed on the bottom cover 2500, and the microphone 2300 is in communication with the air inlet hole. The battery 2200 is mounted in the battery tube 2100, and the battery 2200 and the microphone 2300 are respectively electrically connected to the circuit board. When a user inhales the atomizer 1000, an external airflow enters the microphone 2300 through the air inlet hole and is sensed by the microphone 2300, the microphone 2300 triggers the circuit board and supplies power to the heating element 3 through the electrode columns 7, the heating element 3 heats and atomizes the atomization medium to form aerosol, the air entering from the air inlet hole enters the atomization cavity 200 through the inner cavity of the battery tube 2100 and the air inlet 220, and the air carrying the aerosol enters the air outlet channel 400 through the air outlet 210 and is inhaled by the user through the air outlet channel 400.

In an embodiment, referring to FIG. 3, the battery 2200 and the atomization base 2 are spaced, the atomization base 2 and the microphone 2300 are oppositely arranged in the axial direction of the atomizer 1000, and no structure is arranged at a position between the atomization base 2 and the microphone 2300. Through such arrangement, it can be ensured that the airflow in the entire aerosol-forming device flows smoothly.

In an embodiment, referring to FIG. 3, the main housing 1 further includes an extending portion 13. The extending portion 13 extends outward from an outer wall of one side of the outer cylinder 12, the extending portion 13 and the outer cylinder 12 are enclosed to form a first mounting cavity 14, a second mounting cavity 2510 and a third mounting cavity 2520 that are spaced are formed on the bottom cover 2500, the first mounting cavity 14 and the second mounting cavity 2510 are oppositely provided in the axial direction of the atomizer 1000, the third mounting cavity 2520 and the atomization base 2 are oppositely arranged, and two opposite ends of the battery 2200 are respectively mounted in the first mounting cavity 14 and the second mounting cavity 2510. The microphone 2300 is mounted in the third mounting cavity 2520.

In an embodiment, referring to FIG. 2 and FIG. 3, a microphone base 2400 is further arranged on the bottom cover 2500. The microphone 2300 is sealedly mounted in the third mounting cavity 2520 through the microphone base 2400.

In an embodiment, referring to FIG. 2 and FIG. 3, a mounting opening 2540 is formed at a position on the bottom cover 2500 corresponding to the microphone 2300, the air inlet hole 2530 is formed on a bottom portion of the mounting opening 2540, a sealing cover 2600 is mounted at the mounting opening 2540, the sealing cover 2600 is slidably arranged at the mounting opening 2540, and the sealing cover 2600 can slide to seal the air inlet hole 2530 or open the air inlet hole 2530, that is, when in use, the air inlet hole 2530 may be opened, and when not in use, the air inlet hole 2530 may be closed, to reduce liquid leakage.

In an embodiment, referring to FIG. 2 and FIG. 3, the sealing cover 2600 is sealedly mounted at the mounting opening 2540 through a gasket 2700.

The foregoing descriptions are merely preferred embodiments of this application, but are not intended to limit this application. Any modification, equivalent replacement and improvement made within the spirit and principle of this application shall fall within the protection scope of this application.

## Claims

1. An atomizer, comprising:
a housing assembly; and
a heating element,
wherein a liquid storage cavity and an atomization cavity are formed in the housing assembly,
wherein the heating element is arranged in the housing assembly and is in communication with the atomization cavity and the liquid storage cavity separately,
wherein the atomization cavity has an air inlet and an air outlet that are provided coaxially,
wherein the atomizer further comprises a sealing bar, and
wherein, when the sealing bar is at a first position, the sealing bar passes through the atomization cavity in an axial direction of the atomizer, and the sealing bar is in elastic sealing fit with the housing assembly at the air outlet and the air inlet separately; when the sealing bar is at a second position, the sealing bar is completely detached from the atomizer; and the sealing bar is an integrated connection structure.

2. The atomizer of claim 1, wherein the heating element has an atomization surface facing the atomization cavity, the atomization surface is arranged toward the sealing bar, and the atomization surface is spaced away from the sealing bar.

3. The atomizer of claim 1, wherein the sealing bar comprises a rod body and a head that are integrally connected, and
wherein, when the sealing bar is at the first position, the rod body is in elastic sealing fit with the housing assembly at the air outlet and the air inlet separately, and the head extends out of the housing assembly.

4. The atomizer of claim 3, wherein an air outlet channel in communication with the air outlet is further formed in the housing assembly,
wherein the rod body comprises a first rod section and a second rod section, the first rod section is connected to the head, the first rod section passes through the air outlet channel, the second rod section passes through the atomization cavity, and an outer diameter of the second rod section is less than an outer diameter of the first rod section.

5. The atomizer of any one of claims 1 to 4, wherein a first sealing member is mounted at the air outlet, a second sealing member is mounted at the air inlet, both the first sealing member and the second sealing member are elastic, and the sealing bar is in interference insertion fit with the first sealing member and the second sealing member separately.

6. The atomizer of claim 5, wherein the housing assembly comprises an atomization base and a main housing, the atomization base is mounted in the main housing, the atomization base and the main housing are enclosed to form the liquid storage cavity, and the first sealing member abuts against between the main housing and the atomization base through interference to seal the liquid storage cavity; and the atomization cavity is formed in the atomization base.

7. The atomizer of claim 6, wherein the main housing comprises an inner cylinder and an outer cylinder, and a top end of the inner cylinder is integrally connected to a top end of the outer cylinder; the atomization base is assembled in a bottom inner cavity of the outer cylinder, a bottom end of the inner cylinder extends to the air outlet of the atomization base, and the air outlet channel in communication with the air outlet is formed in the inner cylinder; the outer cylinder, the inner cylinder, and the atomization base are enclosed to form the liquid storage cavity; and the first sealing member abuts against between the outer cylinder and the atomization base through interference, and the first sealing member abuts against between the inner cylinder and the atomization base through interference.

8. The atomizer of claim 6, wherein the atomization base comprises a first base body and a second base body; the first base body comprises a top side portion and a first side portion formed below the top side portion, the second base body comprises a bottom side portion and a second side portion formed on the bottom side portion, the first side portion and the second side portion are connected and engaged with each other, the top side portion is located at a position other than the first side portion and covers a top side of the second side portion, and the bottom side portion is located at a position other than the second side portion and covers a bottom side of the first side portion; and the atomization cavity is formed by enclosing the first side portion and the second side portion, the air inlet is formed in the bottom side portion, and the air outlet is formed in the top side portion.

9. The atomizer of any one of claims 1 to 4, wherein a vent channel is further formed in the housing assembly, one end of the vent channel is in communication with the atomization cavity, and the other end of the vent channel is in communication with the liquid storage cavity.

10. An aerosol-forming device, comprising:
a power supply unit; and
the atomizer of any one of claims 1 to 9,
wherein the power supply unit is configured to supply power to the atomizer, and
wherein the atomizer is configured to heat and atomize an atomization medium after being powered on, to form aerosol.
